# EUROPEAN PATENT APPLICATION

(11) **EP 4 205 941 A1**
(43) Date of publication of application: **05.07.2023**
(21) Application number: 23150041.4
(22) Date of filing: 02.01.2023
(51) Int. Cl.: B29C 45/00, B29C 45/04, B60J 1/17

(54) **GLASS RUN CHANNEL FOR VEHICLE DOOR AND METHOD FOR OBTAINING THEREOF**

(30) Priority: 30.12.2021 PT 2021117716
(71) Applicant: Copefi, S.A., 4711-908 Braga (PT)
(72) Inventor: SOARES DA COSTA, RICARDO JORGE, 4600-642 AMARANTE (PT); MOURÃO GOMES, RUI PEDRO, 4485-529 MINDELO (PT); FERREIRA DA SILVA, JOÃO PEDRO, 4200-529 PORTO (PT)
(74) Representative: Patentree

(57) **Abstract**

The present description relates to a glass run channel for a vehicle door, and to the obtention method, wherein the channel comprises: a support having a U-shaped cross-section for supporting the sliding of the glass, comprising a first side wall, a second side wall and a base, a slide arranged inside said support for receiving the glass sliding thereon; wherein the slide comprises, distributed along said side walls, protrusions projecting towards the glass for guiding the same; wherein the protrusions are arranged alternately between the first side wall and the second side wall.

## Description

### TECHNICAL FIELD

The present description relates to a glass run channel for being mounted along the window frame of a vehicle, for guiding the glass during its movement. The present description further relates to the method for obtaining said glass run channel.

### BACKGROUND

The production method currently used for producing the glass run channel component consists of two distinct components: support and rubber.

One of the production possibilities for this type of component is the extrusion of an elastomeric profile and subsequent application of a flocking coating. In this way the friction between the elastomer and the glass and consequently the force necessary to move it will be considerably reduced.

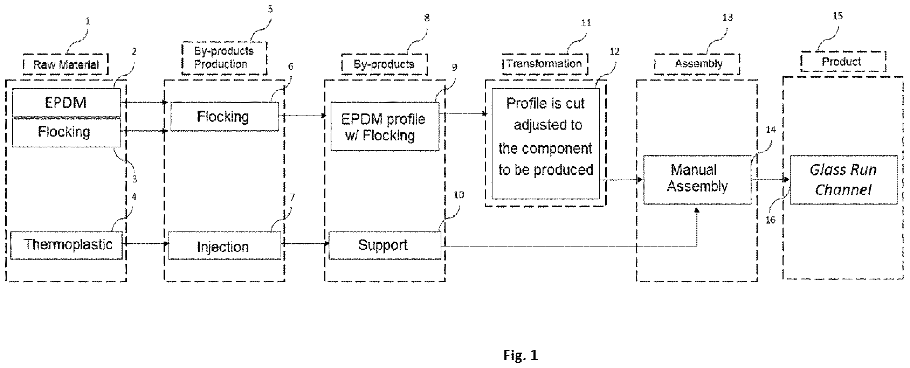

In a first stage of this process the acquisition of raw materials **1** occurs, namely the Ethylene Propylene Diene Monomer Rubber (EPDM) **2,** the Flocking compound **3** and the virgin thermoplastic material **4.** The EPDM **2** is then extruded with the desired geometry and coated with the Flocking **3** through flocking processes **6,** ensuring the adhesion between the two components. In this way, the by-product **8** originated is the continuous profile **9** of EPDM with Flocking. After the production of this by-product **8,** the profile transformation **11** is performed, which involves cutting the profile according to the geometry of the component to be produced **12.** For the production of the support **10** it is necessary to acquire the thermoplastic material **4** and injection **7** of the same into the desired geometry. After completing the production and transformation **11** of all by-products **8** that integrate the final component, it is necessary to carry out the manual assembly **14** of the cut EDPM profile on the injected support. In this way, it is possible to produce Glass Run Channel **16** components (Figure 1).

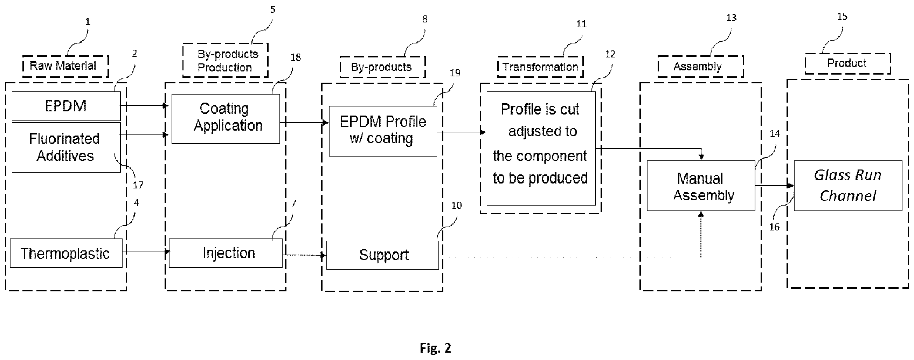

Another solution currently used for the production of glass run channel **16** is the use of coatings, fluorinated additives **17,** in order to reduce the friction of the EPDM profile **2.** After extrusion of the EPDM profile **2,** the coatings **18** are applied. After that, cutting of the profile is carried out adjusted to the component to be produced **12.** As the process described above, the Profile is manually assembled **14** on the support (Figure 2).

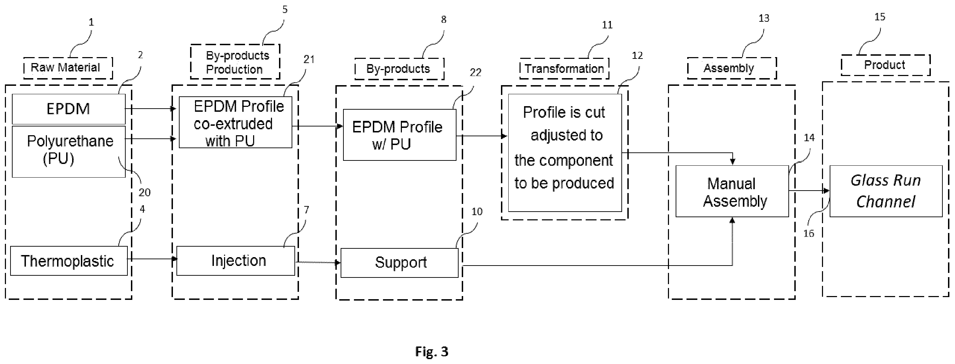

The use of polyurethane (PU) **20** as a friction-reducing element can also be considered. In the course of the by-product **5** production stage, during the extrusion of the EPDM Profile, a polyurethane tape **21** is co-extruded over the contact area between the EPDM Profile and the glass. Similarly to the previous methods, it is necessary to cut the EPDM profile **12** and mount **14** the assembly (EPDM with PU) **22** on the support **10** (Figure 3).

There is also the possibility of producing the support **30** in metal. However, the processes related to the production of these components in metal are even more expensive and time consuming than the plastic injection process, requiring surface treatments and/or painting to avoid possible corrosion of the material. Another solution used for the production of this type of components is 3D printing. However, as with the use of metal, the 3D printing process has a high production time, not being feasible for mass production of components.

All the processes used for producing these components are quite time consuming, due to the considerable number of steps, which results in a high cycle time. All processes involve substantial costs associated with the production of by-products and their transformation, and they also require several operators engaged in the entire process.

These facts are described in order to illustrate the technical problem solved by the embodiments of the present document.

### GENERAL DESCRIPTION

The present description relates to a glass run channel and a manufacturing process of automotive components, which currently is extremely labour dependent, to a fully automated one-step process. The present description ensures a considerable reduction in the cycle time of the glass run channel, through the implementation of multi-material solutions, while guaranteeing the requirements and reliability levels of the product produced by the current processes.

The development of this solution was based on the use of low friction elastomers as well as the elimination of by-product production and transformation related steps found in existing processes, thus substantially reducing the presence of operators engaged in the production of by-products and consequently the production cycle time.

The present description allows the production of components with an innovative design and high adaptability, in a fully automated way, with a new geometry for all the glass run channel components being developed.

One of the advantages of the present description consists in the reduction of production steps, namely the elimination of the step of mounting the rubber on the support. This represents a reduction in production time and respective associated costs.

To overcome the problems of the current solution a new process with a smaller number of steps is presented, as the steps of transformation **11** and assembly of components **13** are eliminated, among others.

The present solution presents some protrusions that ensure the correct alignment of the glass, the fixing of the glass in the desired position and eliminate possible vibrations.

The present description relates to a glass run channel for a vehicle door, comprising:
a support having a U-shaped cross-section for supporting the sliding of the glass, comprising a first side wall, a second side wall and a base,
a slide arranged inside said support, for receiving the glass sliding thereon;
wherein the slide comprises, distributed along said side walls, protrusions projecting towards the glass for guiding the same;
wherein said protrusions are alternately arranged between the first side wall and the second side wall.

In an embodiment, the channel is obtained by plastic injection.

In an embodiment, the base of the support comprises a plurality of openings aligned with each of the protrusions for receiving an injection insert, preferably a metal insert. That is, typically the openings are vertically aligned with the protrusions, i.e., perpendicularly with respect to the base.

In an embodiment, the slide has a U-shaped cross-section comprising a first side wall, a second side wall and a base.

In an embodiment, the base of the slide comprises a plurality of openings aligned with each of the protrusions for receiving an injection insert, preferably a metal insert. That is, typically the openings are vertically aligned with the protrusions, i.e., perpendicularly with respect to the base.

In an embodiment, the protrusions are convex towards the glass. That is, the protrusions have their convexity in contact with the glass.

In an embodiment, the channel comprises two additional protrusions arranged directly opposite, respectively on the first side wall and on the second side wall, at a longitudinal end of the channel.

In an embodiment, the channel has a tapering cross-section in the region of the two additional protrusions.

In an embodiment, the support material is harder than the slide material, in particular the Young's Modulus of the support material is greater than the Young's Modulus of the slide material.

In an embodiment, the distance between the consecutive protrusions of each wall is from 20 to 40 mm, preferably 30 mm.

In an embodiment, each protrusion has a height between 4 to 10 mm, a width between 4 to 8 mm and a length between 15 to 35 mm.

In an embodiment, each protrusion has a height of 8 mm, a width of 6 mm and a length of 25 mm.

In an embodiment, the slide material is a thermoplastic elastomer.

In an embodiment, the slide material is a thermoplastic elastomer with friction additives.

In an embodiment, the thermoplastic elastomer with friction-reducing additives has a coefficient of friction equal or less than 0.3.

In an embodiment, the thermoplastic elastomer with friction-reducing additives comprises a density between 850 and 1500 kg/m³, preferably 1200 kg/m³, more preferably 1120 kg/m³.

The density can be measured by several prior art methods, such as for example by standard ISO 1183:2019 at 23 °C.

In an embodiment, the thermoplastic elastomer with friction-reducing additives comprises a tensile strength from 6 to 12 MPa, preferably from 8 to 10 MPa, more preferably 9.50 MPa.

The tensile strength can be measured by several prior art methods, such as for example by standard DIN 53504-52:2017 at 9.5 MPa.

In an embodiment, the thermoplastic elastomer is a hydrogenated styrene block copolymer.

In an embodiment, the material is a thermoplastic, preferably polypropylene with glass fibre.

In an embodiment, the thermoplastic material comprises 20-40% (w/w) glass fibres, preferably 30% glass fibre.

In an embodiment, the thermoplastic material has a Young's Modulus between 5000 to 8000 MPa, preferably 6000 to 7000 MPa.

In an embodiment, the thermoplastic material has a tensile strength between 50 to 100 MPa, preferably 60 to 90 MPa.

In an embodiment, the thermoplastic material has a density between 850 and 2000 kg/m³, preferably 850 to 1500 kg/m³.

In an embodiment, each protrusion has a height between 4 to 10 mm, a width between 4 to 8 mm and a length between 15 to 35 mm. Preferably, each protrusion has a height of 8 mm, a width of 6 mm and a length of 25 mm.

The present description also relates to a method for obtaining the glass run channel, comprising the following steps:
injecting a support thermoplastic material into a support mould comprising an insert, for obtaining the slide support;
injecting a thermoplastic elastomer with friction-reducing additives into a slide mould, for obtaining the slide comprising the protrusions inside the support, on the thermoplastic material.

In an embodiment, the method comprises the subsequent step of:
after injection of the support thermoplastic material, proceeding with the rotation of the mould for injecting the thermoplastic elastomer with friction-reducing additives for obtaining the slide comprising the protrusions inside the support.

In an embodiment, the support mould and the slide mould are the same mould.

In an embodiment, the method comprises the step of opening the mould and removing the glass run channel.

In an embodiment, injection of the thermoplastic material and the thermoplastic elastomer with friction-reducing additives is done in a single mould.

In an embodiment, the method comprises the subsequent step of:
after injection of the support thermoplastic material, proceeding with the removal of the support from the support mould and placing said support into the slide mould; and
injecting the thermoplastic elastomer for forming the slide.

The present description relates to a vehicle door comprising said glass run channel.

The description also relates to a vehicle comprising said glass run channel.

In order for the glass to move within the glass run channel, the motor moving said glass should normally have a force ≤ 3 N/dm.

### BRIEF DESCRIPTION OF THE DRAWINGS

For an easier understanding, figures are herein attached which represent preferred embodiments that are not intended to limit the object of the present description.
**Figure 1****:** Diagram representation of the process already existing in the prior art, wherein the support comprises EPDM with flocking element.
**Figure 2****:** Diagram representation of the process already existing in the prior art, wherein the support comprises EPDM with coating.
**Figure 3****:** Diagram representation of the process already existing in the prior art, wherein the support comprises EPDM with coating.
**Figure 4****:** Representation of the glass run channel existing in the prior art.
**Figure 5****:** Diagram representation of an embodiment of the process.
**Figure 6****:** Representation of an embodiment of the component produced with the new process.
**Figure 7****:** Schematic representation of an embodiment of the operation of the glass in the glass run channel.
**Figure 8****:** Schematic representation of an embodiment of the operation of the glass in the glass run channel.
**Figure 9** - Schematic representation of an embodiment, with the adhesion areas between components being visible.
**Figure 10****:** Isometric view of an embodiment of the glass run channel.
**Figure 11****:** Isometric view of the lower part of an embodiment of the glass run channel.
**Figure 12****:** Isometric view of the glass run channel.
**Figure 13****:** Schematic representation of an embodiment of the glass run channel.
**Figure 14****:** Exploded view of an embodiment of a car door comprising the glass run channel.

### DETAILED DESCRIPTION

The present description relates to a new glass run channel and a new manufacturing process of automotive components, which currently is extremely labour dependent, to a fully automated one-step process. The present description ensures a considerable reduction in the cycle time, through the implementation of multi-material solutions, while guaranteeing the requirements and reliability levels of the product produced by the current processes.

The development of this solution makes use of low friction elastomers and the elimination of by-product production and transformation related steps found in existing processes, substantially reducing the presence of operators engaged in the production of by-products and consequently the production cycle time.

The present description allows the production of components with high adaptability, in a fully automated way, with a new geometry for all glass run channel components being developed. This geometry is called "Intermittent Rubber" **24.** The developed solution comprises the application of a thermoplastic material **23** (Hardmaterial) and rubber with friction-reducing additives **24** (Softmaterial).

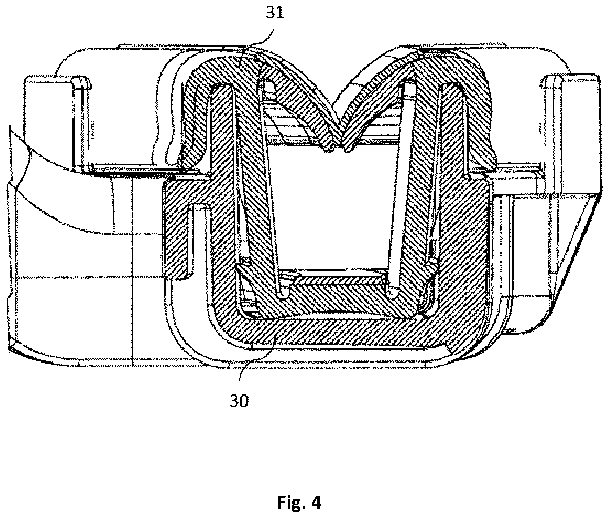

**Figure 4** represents the glass run channel existing on the market, in which the shape of the lips **31** is visible. This run channel is not compatible with the current method for obtaining the new glass run channel as, if injection of rubber were to be attempted, the mould would be considerably complex and the probability of production-related errors would be very high. The most obvious error that would result from the injection of rubber would be that the rubber lips would weld together during injection and thus the component would no longer be functional. Furthermore, it would also be necessary to apply a flocking or coating operation to reduce friction of the injected rubber.

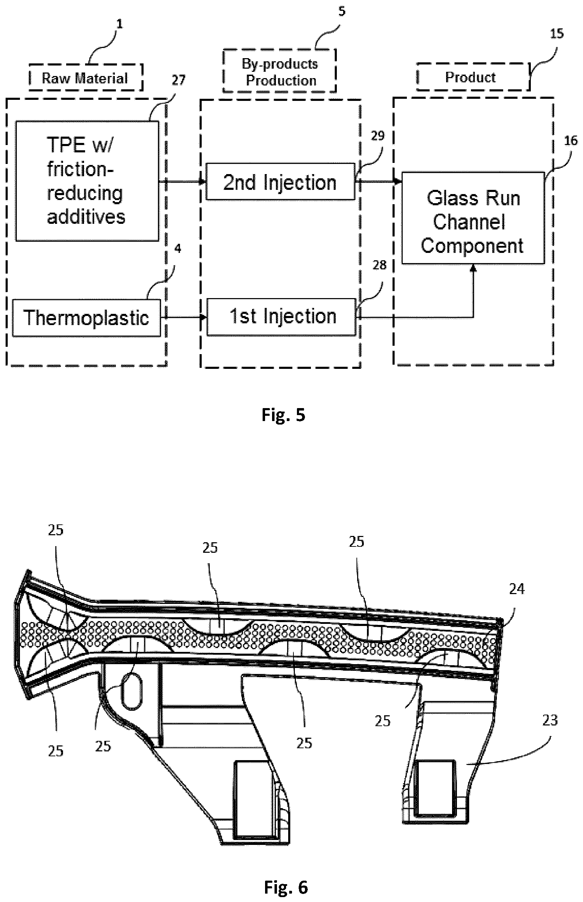

**Figure 5** represents a diagram of the method for obtaining the glass run channel component.

**Figure 6** represents an embodiment of the glass run channel comprising thermoplastic material **23,** preferably polypropylene; rubber with friction-reducing additives **24** which create a plurality of protrusions **25.** The protrusions **25** are alternated between the first and the second inner wall of the thermoplastic support. The alternating position of the protrusions between the first and second inner wall of the support allows for an easier production during injection. In this way, it is possible to produce this component exclusively by injection, without the need of steps to assemble the rubber on the support. To facilitate and enable the injection process of the polymeric elastomer with friction-reducing additives this geometry is the most efficient and able to adapt to the production process. This system of protrusions allows the injection of the polymeric elastomer with friction additives on top of the support with a mould. As polymeric elastomer with friction-reducing additives is used, no flocking or additional coatings are required. If the protrusions of one inner wall of the support were aligned with the protrusions of the second inner wall of the support, there would be a risk that they would become welded together during injection and thus render the component unfit for use. Moreover, the fact that the protrusions are alternated between the first and the second wall of the support allows maintaining the balance of forces on the component, keeping the glass aligned with the component and thus eliminating possible vibrations.

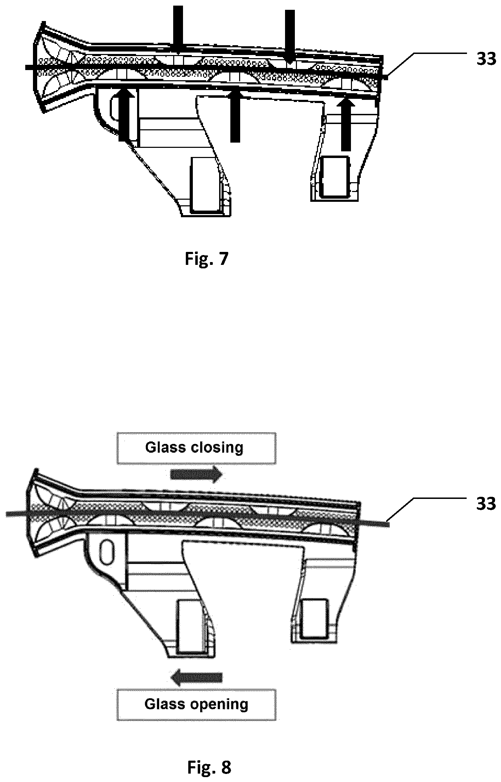

**Figure 7** represents an embodiment, in which the glass **33** of a car door window is guided by the protrusions. In this figure it can be seen that the glass is aligned and in contact with the surfaces of the protrusions.

**Figure 8** represents an embodiment, in which the glass **33** is between the protrusions, where the arrows demonstrate the trajectory of the glass when closing or opening the window glass.

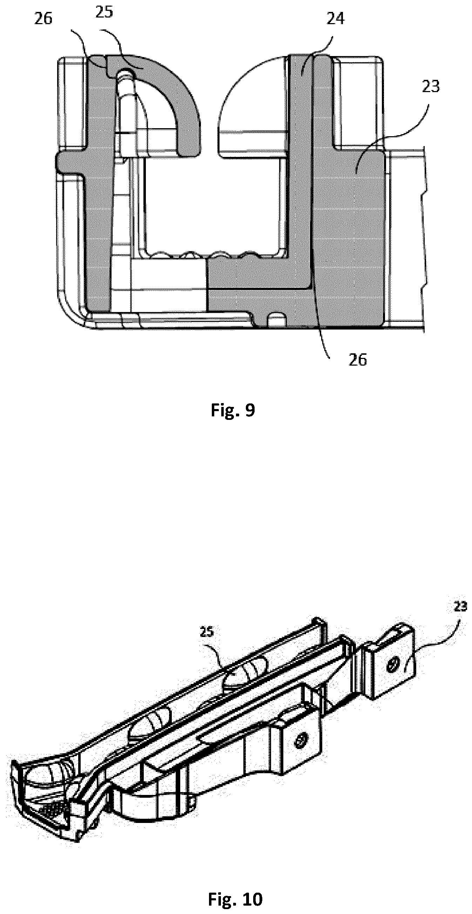

**Figure 9** demonstrates an embodiment of the component obtained by multi-material injection. The developed solution has good adhesion **26** between both injected materials, namely the low friction thermoplastic elastomers **24** and the support **23,** preventing the materials from separating during its operation as, for example, during the movement of the glass.

**Figure 10** demonstrates a view of the glass run channel component, with the protrusions **25** and the thermoplastic component **23** being visible.

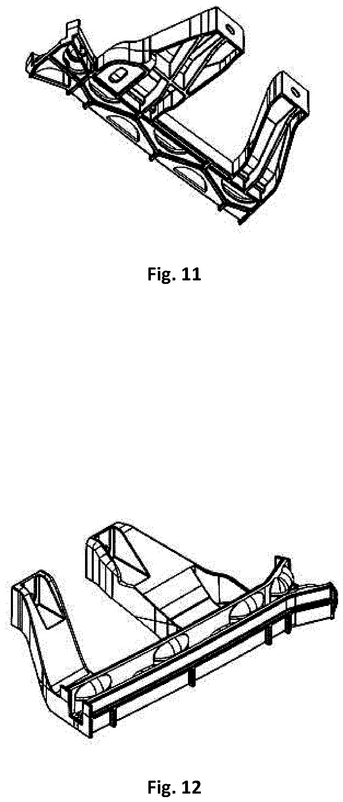

**Figure 11** represents an isometric view of the lower part of the thermoplastic component, with the plurality of cavities **34** located at the base being visible. These cavities allow the geometry of the protrusions to be produced.

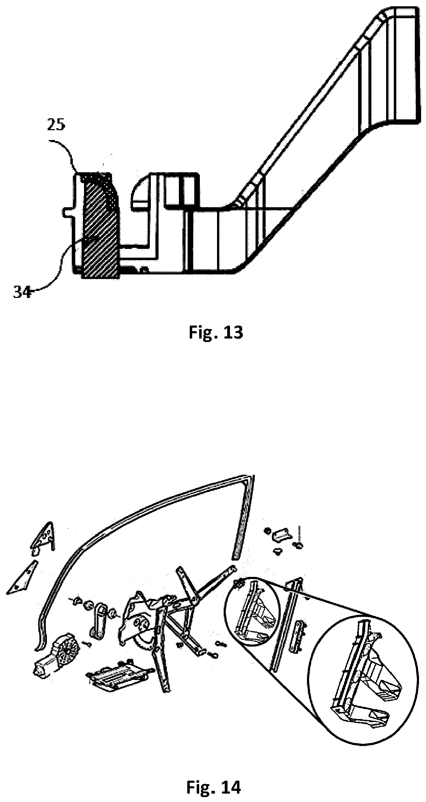

**Figure 13** represents an embodiment, in which during the injection of the rubber in the support it is necessary to use metallic inserts so that the protrusions acquire the desired geometry. It is possible to see the area filled by the mould tap (Area with diagonal lines) **34** during the injection of the rubber to obtain the final geometry of the protrusions (Area with crossed lines) **25.**

**Figure 14** represents an exploded view of a vehicle door having the glass run channel component.

In an embodiment, the rubber is a low friction thermoplastic elastomer.

In an embodiment, the thermoplastic elastomer with friction-reducing additives comprises a density of 1200 kg/m³.

In an embodiment, the thermoplastic elastomer with friction-reducing additives has a tensile stress from 4 MPa to 10 MPa, preferably 5 MPa to 6 MPa, more preferably 5.90 MPa.

In an embodiment, the thermoplastic elastomer with friction-reducing additives has a tensile strength from 6 to 12 MPa, preferably 8 to 10 MPa, more preferably 9.50 MPa.

In an embodiment, the thermoplastic elastomer with friction-reducing additives has a tensile elongation from 100 to 300 %, more preferably 230 %.

In an embodiment, the thermoplastic elastomer with friction-reducing additives has an indentation resistance of 85 MPa.

In an embodiment, the thermoplastic elastomer with friction-reducing additives has a viscosity from 10 to 30 Pa.s at 200°C, preferably from 20 to 27 Pa.s at 200°C, more preferably from 26 Pa.s at 200°C.

The viscosity can be measured by several prior art methods, such as for example by standard ASTM D2857 or ISO 1628, at 200°C.

In an embodiment, the thermoplastic elastomer comprises friction-reducing additives that may be selected from Zonyl MP 1500; PTFE-based fluorinated additives; PEBAX 3533; PEBAX 5533; ISOTHANE 80A; OELLETHANE 80^{a}, among others.

In an embodiment, the thermoplastic elastomer with friction-reducing additives has a coefficient equal or less than 0.3.

In an embodiment, the thermoplastic elastomer is a hydrogenated styrene block copolymer.

In a preferred embodiment, the thermoplastic elastomer used is GLS ABO-087.

The following Table shows a comparison between the thermoplastic elastomer used and the flocking used in the prior art:

**Table 1- Comparison of coefficient of friction between flocking and GLS ABO-087 material**

| **Material** | **Coefficient of static friction** | **Coefficient of dynamic friction** |
|---|---|---|
| **Flocking (Reference values)** | 0.27 | 0.24 |
| **GLS ABO-087** | 0.33 | 0.23 |

Another advantage of using GLS ABO-087 when compared with the flocking is the possibility of injecting the material without the need for transformation. In case of EPDM+Flocking (rubber used in the production of the component currently marketed) it needs to be acquired in roll, transformed (cutting of the rubber) and subsequently mounted on the support.

In an embodiment, the thermoplastic material is a Polypropylene (PP) with Glass Fibre. Preferably polypropylene with 30 % (m/m) glass fibres (PP+30GF).

In an embodiment, the thermoplastic material comprises a Young's Modulus 5000 to 8000 MPa, preferably 6000 to 7000 MPa.

In an embodiment, the thermoplastic material comprises a tensile strength between 50 to 100 MPa, preferably 60 to 90 MPa.

In an embodiment, the thermoplastic material has a density between 850 and 2000 kg/m³, preferably 850 to 1500 kg/m³.

The invention allows the adaptation of any glass run channel component, regardless of its nominal dimensions. To this end, it is only necessary to change the dimensions, spacing and quantities of protrusions **25,** for the developed solution to adapt to any geometry of this type of component.

In an embodiment, the glass run channel comprises: a support having a U-shaped cross-section for supporting the sliding of the glass, comprising a first side wall, a second side wall and a base; and a slide arranged inside said support for receiving the glass sliding thereon. The slide comprises, distributed along said side walls, protrusions projecting towards the glass for guiding the same and said protrusions are arranged alternately between the first side wall and the second side wall.

In an embodiment, the protrusions are flexible.

In a preferred embodiment, the number of protrusions varies depending on the size of the vehicle door, preferably it varies between 2 to 20 protrusions.

In an embodiment, the distance of each consecutive protrusion on a wall is of 30 mm.

Preferably the glass run channel has a length between 50 to 400 mm, more preferably between 90 to 330 mm.

Considering the reduction of production steps and the respective reduction of operators engaged in the process, the present solution foresees only one operator responsible for the control of the injection equipment.

The solution developed allows the production of all types of glass run channels, regardless of their nominal dimensions. It also allows the production of all components capable of being injected and composed of two materials, such as thermoplastic materials and elastomers with friction-reducing additives. This solution can be applied to components using flocking compounds as a friction reducer.

**Table 2 - Comparison between the developed solution and the prior art**

| **Solution developed** | **Current injection solution** |
|---|---|
| Low production cost | High production cost |
| Fully automated process | Highly labour-intensive process |
| Reduced manufacturing time | High manufacturing time |
| Fully integrated components | Assembly of 2 or more components |
| Fully recyclable materials | Rubber not recyclable due to flocking |

**Figure 7** represents the method for obtaining the final product **15,** more specifically the glass run channel **16,** the process of multi-material overmoulding is used, in the following order:
1^{st} - the thermoplastic material **4** is injected **28** for obtaining the rigid component consisting of the support **23.** The injection should be carried out at a temperature between 200 to 300 °C, pressure between 20 and 200 MPa, preferably between 60 to 120 MPa, at an injection speed between 0.02 and 0.2 m/s, preferably 0.05 to 0.15 mm/s.
2^{nd} - the Thermoplastic Elastomer (TPE) is injected **29** with friction-reducing additives **27** on the surface of the previously injected rigid component.

The production of the developed component can be done in one of the following ways: Rotational Mould or Simple Mould.

In one embodiment, the rotational mould consists of two moulding cavities. In the first cavity occurs the injection of the thermoplastic material PP+30GF, obtaining the support with the final geometry. After the injection of the support, the moulding plate rotates and the second injection takes place, more specifically the injection of thermoplastic elastomer, preferably rubber. For this type of injection, an injection equipment with two independent injection nozzles is required, so that there is an injection nozzle for each material. In short, the injection sequence is as follows:
adding the first injection material, polypropylene with glass fibre, in the injector;
closing the mould;
injecting the polypropylene with glass fibre into the mould;
opening the mould;
rotating the mould so that it is possible to inject a second material on top of the first injected material;
closing the mould;
injecting the second material, thermoplastic elastomer with friction additives;
opening the mould;
removal of the final component.

In an embodiment, the simple mould uses two moulds, two injection machines (one for each material to be injected) and a handling system (for example: robotic arm, an operator, pick-and-place, among others). This process allows both injections to take place at the same time. That is, during the injection of the rubber on top of the support (in the 2^{nd} mould) another support can be injected into the 1^{st} mould. This way, this process allows a continuous production of components. The production process using simple moulds occurs as follows:
closing of the first mould;
injecting the polypropylene with glass fibre in the 1^{st} mould opening of the mould;
transferring the injected component (support) from the 1^{st} mould into the 2^{nd} mould using handling systems;
positioning of the 1^{st} injected component (support) in the cavity of the 2^{nd} mould closing of the 2^{nd} mould;
injecting the thermoplastic elastomer with friction additives on top of the support, in the 2^{nd} mould;
opening the mould and removal of the part.

The term "comprises" or "comprising" when used herein is intended to indicate the presence of stated features, elements, integers, steps and components, but not to preclude the presence or addition of one or more features, elements, integers, steps and components, or groups thereof.

The present invention is, of course, in no way restricted to the embodiments described herein, and a person of ordinary skill in the art may foresee many possibilities for modifying the same and for replacing technical features by equivalent ones, depending on the requirements of each situation, as defined in the appended claims.

The following claims define additional embodiments of the present description.

## Claims

1. Glass run channel for a vehicle door, comprising:
a support (23) having a U-shaped cross-section for supporting the sliding of the glass (33), comprising a first side wall, a second side wall and a base,
a slide arranged inside said support (23), for receiving the glass (33) sliding thereon;
wherein the slide comprises, distributed along said side walls, protrusions (25) projecting towards the glass (33) for guiding the same;
wherein said protrusions (25) are alternately arranged between the first side wall and the second side wall along said slide.

2. Channel according to the preceding claim which is obtained by plastic injection.

3. Channel according to any one of the preceding claims wherein the support base (23) comprises a plurality of openings aligned with each one of the protrusions for receiving an injection insert.

4. Channel according to any one of the preceding claims wherein the slide has a U-shaped cross-section comprising a first side wall, a second side wall and a base, preferably the slide base comprises a plurality of openings aligned with each one of the protrusions (25) for receiving an injection insert and wherein the protrusions are convex towards the glass.

5. Channel according to any one of the preceding claims, comprising two additional protrusions arranged directly opposite, respectively on the first side wall and on the second side wall, at a longitudinal end of the channel.

6. Channel according to the preceding claim wherein the channel has a tapering cross-section in the region of the two additional protrusions (25).

7. Channel according to any one of the preceding claims wherein the support material (23) is harder than the slide material, in particular the Young's Modulus of the support material (23) is greater than the Young's Modulus of the slide material.

8. Channel according to any one of the preceding claims wherein the slide material is a thermoplastic elastomer with friction-reducing additives, preferably the thermoplastic elastomer with friction-reducing additives has a coefficient of friction equal or less than 0.3, more preferably the thermoplastic elastomer is a hydrogenated styrene block copolymer.

9. Channel according to any one of the preceding claims wherein the support material (23) is a thermoplastic, preferably the thermoplastic material is polypropylene with glass fibre, more preferably polypropylene with 30% (w/w) glass fibres.

10. Method for obtaining the glass run channel according to any one of the preceding claims, comprising the following steps:
injecting a support thermoplastic material (23) into a support mould comprising an insert, for obtaining the slide support;
injecting a thermoplastic elastomer with friction-reducing additives into a slide mould, for obtaining the slide comprising the protrusions inside the support, on the thermoplastic material.

11. Method for obtaining the glass run channel according to the preceding claim, comprising the subsequent step of:
after injection of the support thermoplastic material (23), proceeding with the rotation of the mould for injecting the thermoplastic elastomer with friction-reducing additives for obtaining the slide comprising the protrusions inside the support.

12. Method according to the preceding claim wherein the support mould and the slide mould are the same mould.

13. Method according to claim 10, comprising the subsequent step of:
after injection of the support thermoplastic material (23), proceeding with the removal of the support from the support mould and placing said support into the slide mould for injection of the thermoplastic elastomer for forming the slide.

14. Door of a vehicle comprising the glass run channel according to claims 1 to 9.

15. Vehicle comprising the glass run channel according to claims 1 to 9.
